(19) Europäisches Patentamt
European Patent Office
Office européen des brevets

(11) **EP 2 945 438 A1**

(12) **EUROPEAN PATENT APPLICATION**

(43) Date of publication:
**18.11.2015 Bulletin 2015/47**

(51) Int Cl.:
*H04W 52/10* (2009.01)          *H04W 8/00* (2009.01)
*H04L 1/18* (2006.01)          *H04W 76/02* (2009.01)

(21) Application number: **15167639.2**

(22) Date of filing: **13.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **14.05.2014 US 201461993095 P**

(71) Applicant: **Innovative Sonic Corporation Taipei City 11491 (TW)**

(72) Inventors:
• **Chang, Wei-Che**
  **11491 Taipei City (TW)**
• **Li, Ming-Che**
  **11491 Taipei City (TW)**

(74) Representative: **Hoefer & Partner Patentanwälte mbB**
  **Pilgersheimer Straße 20**
  **81543 München (DE)**

(54) **METHOD AND APPARATUS FOR SUPPORTING FOR DEVICE-TO-DEVICE (D2D) COMMUNICATION IN A WIRELESS COMMUNICATION SYSTEM**

(57)     A method and apparatus are disclosed for supporting D2D (Device-to-Device) communication in a wireless communication system, wherein a first user equipment (UE) and a second user equipment are capable of D2D communication and are served by an evolved Node B (eNB) (705). The method includes the second UE transmitting a first Scheduling Assignment (SA) and a first data to the first UE (710). The method also includes the second UE receiving a Hybrid Automatic Repeat Request Acknowledgement (HARQ-ACK) and a D2D power control information from first UE (715). The method further includes the second UE transmits a second SA and a second data to the first UE, wherein the second UE adjusts a transmission power of the second SA and the second data based on the D2D power control information received from the first UE (720).

FIG. 7

**Description**

**CROSS-REFERENCE TO RELATED APPLICATIONS**

The present Application claims the benefit of U.S. Provisional Patent Application Serial No. 61/993,095 filed on May 14, 2014, the entire disclosure of which is incorporated herein by reference.

**FIELD**

This disclosure generally relates to wireless communication networks, and more particularly, to a method and apparatus for supporting D2D communication in a wireless communication system.

**BACKGROUND**

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

**SUMMARY**

A method and apparatus are disclosed for supporting D2D (Device-to-Device) communication in a wireless communication system, wherein a first user equipment (UE) and a second user equipment are capable of D2D communication and are served by an evolved Node B (eNB) and are defined in independent claims 1, 5, 11 and 12, respectively. The respective dependent claims define preferred embodiments thereof, respectively. The method according to a first aspect includes the second UE transmitting a first Scheduling Assignment (SA) and a first data to the first UE. This method also includes the second UE receiving a Hybrid Automatic Repeat Request Acknowledgement (HARQ-ACK) and a D2D power control information from first UE. This method further includes the second UE transmits a second SA and a second data to the first UE, wherein the second UE adjusts a transmission power of the second SA and the second data based on the D2D power control information received from the first UE.

**BRIEF DESCRIPTION OF THE DRAWINGS**

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a reproduction of Figure 1 of 3GPP R1-140778.

FIG. 6 is a flow chart according to one exemplary embodiment.

FIG. 7 is a flow chart according to one exemplary embodiment.

**DETAILED DESCRIPTION**

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including R1-140778, "On scheduling procedure for D2D", Ericsson; TS 36.213 V11.2.0, "E-UTRA; Physical layer procedures (Release 11)"; Minutes of 3GPP #76 RAN1 chairman's note; Minutes of 3GPP #76b RAN1 chairman's note; TS 36.212 V11.2.0, "E-UTRA; Multiplexing and channel coding (Release 11)"; TS 36.211 V11.2.0, "E-UTRA; Physical Channels and Modulation (Release 11)"; and TS 36.321 V11.2.0, "E-UTRA; Medium Access Control (MAC) protocol specification (Release 11)". The standards and documents listed above are hereby expressly incorporated by reference in their entirety.

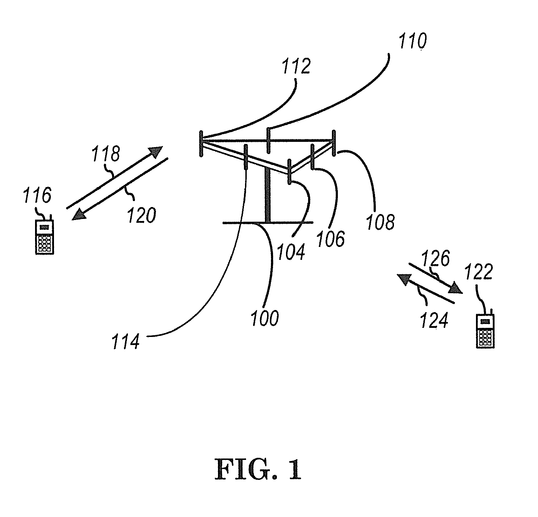

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

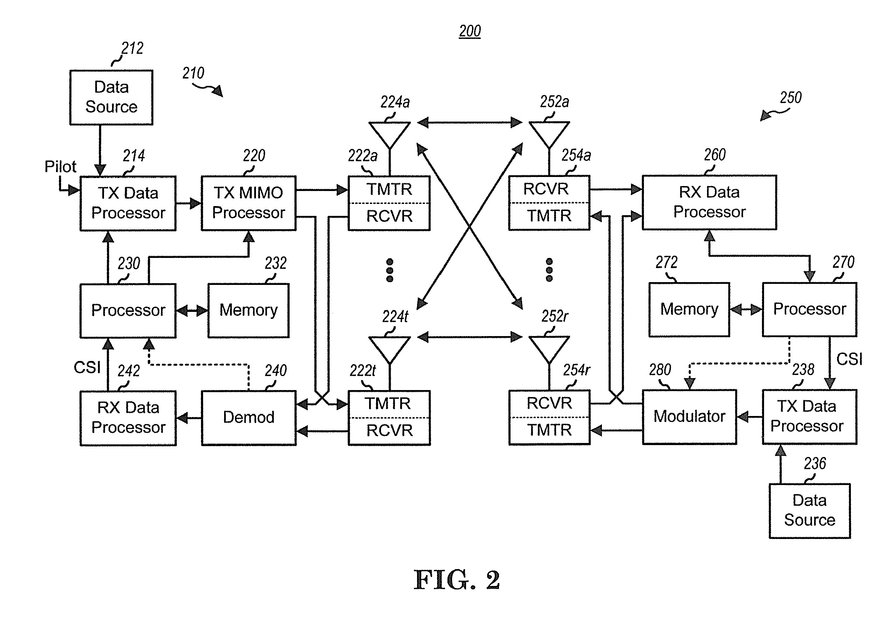

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

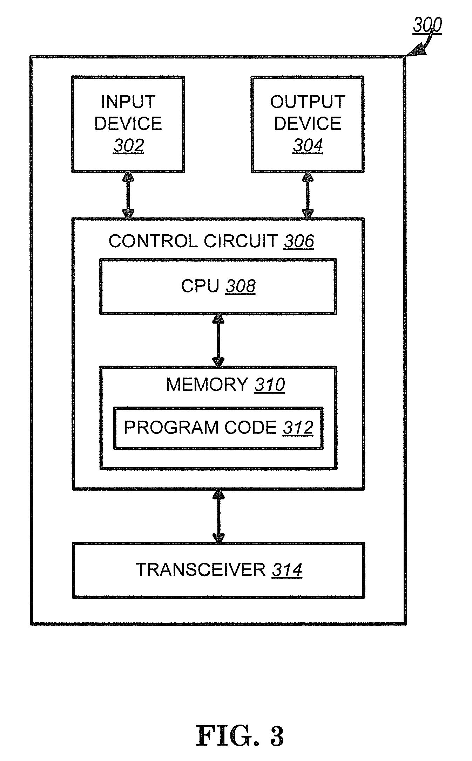

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

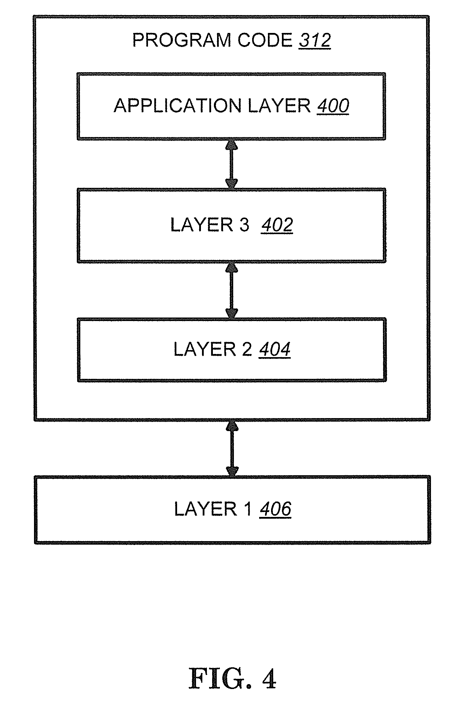

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP R1-140778 discusses possible D2D communication flow and basic function and contents of scheduling assignment (SA) as follows:

### ▪ Scheduling Procedure

The scheduling procedure for D2D communication involves the following two major phases:

- obtaining resources for transmissions/receptions, and
- transmission/reception for a D2D transmitter/receiver, respectively,

where the transmissions consist of scheduling assignment (SA) transmissions and the actual data transmissions.

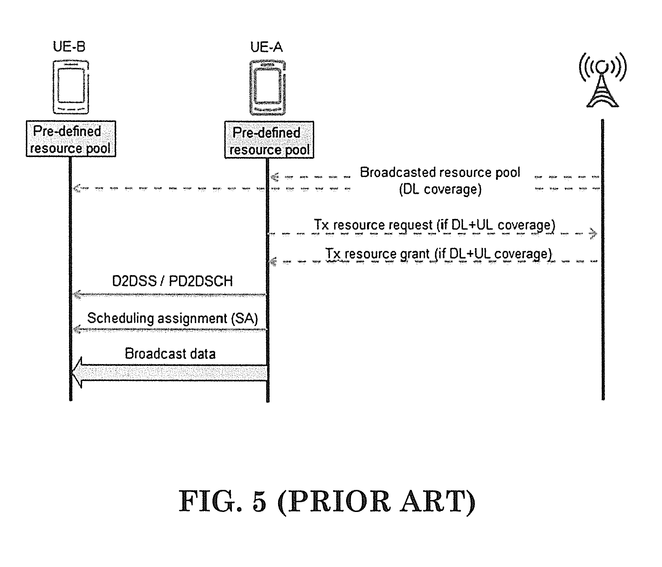

Figure 1 [reproduced as FIG. 5] illustrates the scheduling procedure, the details of which are further described below.

### ▪ Scheduling Assignments (SAs)

An SA is a compact (low-payload) message containing control information, e.g., pointer(s) to time-frequency resources for the corresponding data transmissions. The contents of SAs (i.e., the actual data scheduling) may be decided autonomously by the broadcasting node (e.g., when out-of-coverage) or by the network (e.g., when in coverage or in partial coverage). Each SA carries also an L1 SA identity [5] to allow the receiving UE to only decode the data that is relevant for this UE. Example contents of an SA are provided in Table 3, where Option 1 and Option 2 are shown (see [4] for simulation results for the two options; see [5] for more details on the two options).

**Table 3. Two options for SA contents**

| Option 1 (39 bits) | Option 2 (23 bits) |
|---|---|
| • Tx address (16 bits)<br>• Rx address (16 bits)<br>• Timing advance (4 bits) [e.g., 16 ms in 1ms steps]<br>• Resource allocation in the time domain (3 bits) [e.g. 8 different time-domain randomized patterns] | • Tx or Rx address (16 bits)<br>• Timing advance (4 bits) [e.g., 16 ms in 1ms steps]<br>• Resource allocation in the time domain (3 bits) [e.g., 8 different time-domain randomized patterns] |

Furthermore, in 3GPP TS 36.213, the PUSCH power control is defined as followed:

**5.1.1 Physical uplink shared channel**

**5.1.1.1 UE behaviour**

The setting of the UE Transmit power for a physical uplink shared channel (PUSCH) transmission is defined as follows.

If the UE transmits PUSCH without a simultaneous PUCCH for the serving cell $c$, then the UE transmit power $P_{\text{PUSCH},c}(i)$ for PUSCH transmission in subframe i for the serving cell $c$ is given by

$$P_{\text{PUSCH,c}}(i) = \min \left\{ \begin{array}{l} P_{\text{CMAX},c}(i), \\ 10\log_{10}(M_{\text{PUSCH,c}}(i)) + P_{\text{O\_PUSCH,c}}(j) + \alpha_c(j) \cdot PL_c + \Delta_{\text{TF},c}(i) + f_c(i) \end{array} \right\} \text{ [dBm]}$$

[...]
where,

- $P_{\text{CMAX},c}(i)$ is the configured UE transmit power defined in [6] in subframe $i$ for serving cell c and $\hat{P}_{\text{CMAX,c}}(i)$ is the linear value of $P_{\text{CMAX},c}(i)$.
- $M_{\text{PUSCH,c}}(i)$ is the bandwidth of the PUSCH resource assignment expressed in number of resource blocks valid for subframe $i$ and serving cell $c$.
- $P_{\text{O\_PUSCH,c}}(j)$ is a parameter composed of the sum of a component $P_{\text{O\_NOMINAL\_PUSCH,c}}(j)$ provided from higher layers for $j=0$ and 1 and a component $P_{\text{O\_UE\_PUSCH,c}}(j)$ provided by higher layers for $j=0$ and $1$ for serving cell $c$.
- $PL_c$ is the downlink pathloss estimate calculated in the UE for serving cell $c$ in dB and $PL_c$ = *referenceSignalPower* - higher layer filtered RSRP, where *referenceSignalPower* is provided by higher layers and RSRP is defined in [5] for the reference serving cell and the higher layer filter configuration is defined in [11] for the reference serving cell.

- $\Delta_{TF,c}(i) = 10\log_{10}\left(\left(2^{BPRE \cdot K_s} - 1\right) \cdot \beta_{offset}^{PUSCH}\right)$ for $K_S = 1.25$ and 0 for $K_S = 0$ where $K_S$ is given by the parameter *deltaMCS-Enabled* provided by higher layers for each serving cell c.
- $\delta_{\text{PUSCH,c}}$ is a correction value, also referred to as a TPC command and is included in PDCCH/EPDCCH with DCI format 0/4for serving cell $c$ or jointly coded with other TPC commands in PDCCH with DCI format 3/3A whose CRC parity bits are scrambled with TPC-PUSCH-RNTI.

[...]

In addition, the agreement in the minutes of 3GPP #76 RAN1 shows the resource allocation of mode 1 and mode 2 as follows:

**Agreements:**

- From a transmitting UE perspective a UE can operate in two modes for resource allocation:

  - Mode 1: eNodeB or rel-10 relay node schedules the exact resources used by a UE to transmit direct data and direct control information

- FFS: if semi-static resource pool restricting the available resources for data and/or control is needed

  - Mode 2: a UE on its own selects resources from resource pools to transmit direct data and direct control information

    - FFS if the resource pools for data and control are the same
    - FFS: if semi-static and/or pre-configured resource pool restricting the available resources for data and/or control is needed

  - D2D communication capable UE shall support at least Mode 1 for in-coverage
  - D2D communication capable UE shall support Mode 2 for at least edge-of-coverage and/or out-of-coverage
  - FFS: Definition of out-of-coverage, edge-of-coverage, in-coverage

## Agreement:

- For example, definition of coverage areas is at least based on DL received power

Also, the minutes of 3GPP #76b RAN1 discusses the basic architecture of SA content and SA transmission and some observations as follows:

## Agreements:

- For Mode 1 transmission,

  - eNodeB or Rel-10 relay allocates resources to a D2D transmitter for SA and Data using PDCCH or EPDCCH

    - FFS: Linkage between SA and Data
    - FFS: Separate grant for Data
    - Single grant can schedule multiple Data transmission opportunities

      - The multiple opportunities can be used for the multiple transmissions of a single TB
      - The multiple opportunities can be used for the transmissions of multiple TBs
      - FFS: Which entity decides how each transmission opportunity is used

    - FFS: Single grant can schedule single SA transmission
    - Single grant can schedule multiple SA transmissions

      - FFS: Whether the multiple SA transmissions are of the same SA or different SA

  - FFS: C-RNTI or another UE-specific RNTI is used at least for scrambling of CRC of a D2D grant
  - eNodeB or Rel-10 relay controls transmission power of SA and Data using PDCCH or EPDCCH

[...]

## Agreements:

- One or more resource patterns for transmission (RPT) of time and/or frequency resources for multiple transmission opportunities of data TBs can be defined
- RPT is either implicitly or explicitly signaled by the eNB or Rel-10 Relay for Model
- RPT is either implicitly or explicitly signaled in SA
- If multiple transmission opportunities of the same SA are supported

FFS whether one or more RPT are defined for (re)-transmissions of Sas

[...]

**Agreements:**

- Semi-static pool(s) of resources can be allocated for SA
- eNodeB may broadcast the information about the SA resource pool using SIB for D2D UE

  - Transmission pool for Mode 2
  - Reception pool(s) for Mode 1 and Mode 2

UE is not required to decode neighboring cell SIB

[...]

**Observation:**

Companies are encouraged to consider possible options (including implementation-based mechanisms) for WAN protection in case D2D and WAN resources are FDMed from system perspective.

Some possible options include:

- Option 1) Power control for D2D signal transmission

  - Note 1: Transmit power is controlled by eNB in Communication Mode 1 and discovery Type 2.
  - Note 2: Fixed power (non-UE specific) or open loop power control can be considered in Communication Mode 2 (if supported by in-coverage UEs) and discovery Type 1.
  - Note 3: Solutions to cope with D2D coverage difference when UE-specific transmit power control is applied is different should be considered.

- Option 2) RSRP measurement based resource selection restriction
- Option 3) Guard band between WAN and D2D resources
- Option 4) power boosting of WAN transmission

Others including combination between options are not precluded.

[...]

In R-12, the D2D communication discussions focus on broadcast communication. In broadcast communication, a D2D-transmitting UE would transmit the SA (Scheduling Assignment) after receiving the UL (Uplink) grant from eNB. The SA typically contains some control signal and the indication of communication data resources. However, in the broadcast D2D scenario, the power control issue is not so critical due to the broadcast nature. Moreover, the transmitting UE in the D2D broadcast scenario may not need to consider whether the transmission is succeeding. Thus, the reports like HARQ-ACK (Hybrid Automatic Repeat Request Acknowledgement) are not typically needed.

According to the invention, the D2D unicast scenario may still maintain the structure of broadcast scenario in D2D communication; and the transmitting UE would still transmit the SA (Scheduling Assignment) which indicates a specific data resources. Moreover, the source ID and target ID are also possibly carried by SA to enable the receiving UE to discern or differentiate the interesting D2D UEs. In order to ensure the transmission succeeding rate of unicast D2D communication, the receiving UE would need to send back a transmission successful report, such as a HARQ-ACK. More specifically, the HARQ-ACK may associate with the D2D communication data. If the receiving UE receive the SA and the corresponding data successfully, receiving UE would send an ACK (Acknowledgement) back to the transmitting UE. On the other hand, if the receiving UE only receive the SA but not the data, the receiving UE would send a NACK (Negative Acknowledgement) back to the transmitting UE.

An exemplary D2D unicast scenario is provided as follows:

- First, a second UE transmits some data to a first UE with a specific SA (including a source ID indicating the second UE and a target ID indicating the first UE).

- Second, the first UE receives the SA and corresponding data from the second UE. The first UE sends a HARQ-ACK back to the second UE to inform the second UE whether or not the first UE had successfully received the D2D data.

Further, according to the invention, in order to reduce the UE's power consumption, to reduce the interference to neighboring data resources, or to improve the transmission SINR (Signal to Interference plus Noise Ratio), a power control mechanism should be considered in the unicast communication structure. In legacy LTE system, the UL (Uplink) power is decided by some parameters like resource block size, DL (Downlink) pathloss, open-loop power control (including nominal transmission power and UE-specific transmission power) and close-loop power control. For close-loop power control in legacy LTE, the TPC (Transmit Power Control) command is the most important parameter. The eNB would transmit the TPC command in DCI (Downlink Control Information) to indicate and request a specific UE to adjust the transmission power to ensure that a specified communication SINR could be achieved.

Still further, according to the invention, since the HARQ-ACK report mechanism in unicast scenario could be reasonably applied to ensure the system throughput, the power control information could be delivered with the transmission of HARQ-ACK to enable and request the transmitting UE to adjust the transmitting power. The TPC command could potentially be used to reduce the loading capability of transmissions.

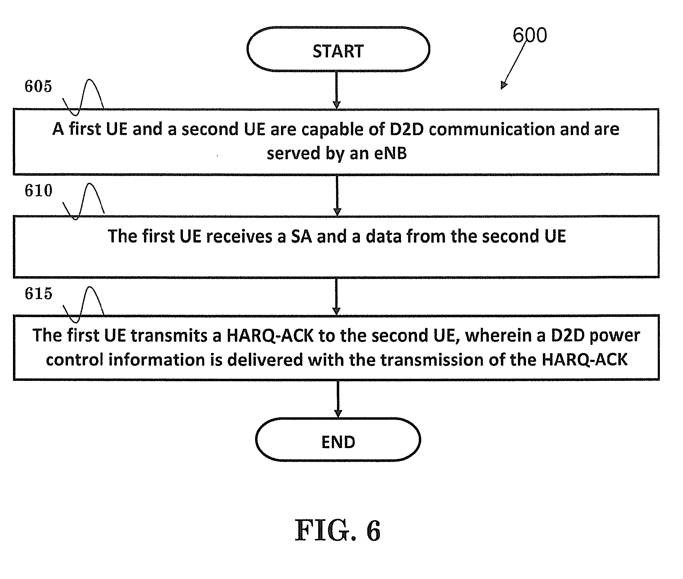

FIG. 6 is a flow chart 600 in accordance with a first exemplary embodiment according to the invention from the perspective of a first UE. In step 605, a first UE and a second UE are capable of D2D communication and are served by an evolved Node B (eNB). In step 610, the first UE receives a SA and a data from the second UE. In step 615, the first UE transmits a HARQ-ACK to the second UE, wherein a D2D power control information is delivered with the transmission of the HARQ-ACK.

In a first embodiment thereof, the D2D power control information could include a D2D TPC command, a nominal D2D transmission power, a UE-specific D2D transmission power, a D2D actual reference signal transmission power value, or any combination thereof. In other words, the D2D power control information could include one or more information selected from the group consisting of D2D TPC command, a nominal D2D transmission power, a UE-specific D2D transmission power, and a D2D actual reference signal transmission power value. Furthermore, the HARQ-ACK could include an ACK or a NACK.

In a second embodiment thereof, which might be combined with the first embodiment thereof, the transmission resource of the HARQ-ACK and the D2D power control information could be determined by the SA. Alternatively, the transmission resource of HARQ-ACK and the power control information could be configured by a higher-layer.

Referring back to FIGS. 3 and 4, the device 300 includes a program code 312 stored in memory 310 of a first UE for supporting D2D communication in a wireless communication system, wherein the first UE and a second UE are capable of D2D communication and are served by an eNB. The CPU 308 could execute program code 312 to enable the first UE (i) to receive a SA and a data from the second UE, and (ii) to transmit a HARQ-ACK to the second UE, wherein a D2D power control information is delivered with the transmission of the HARQ-ACK.

In addition, the CPU 308 could execute the program code 312 to perform all of the above-described actions and steps or others described herein, in particular those described in paragraphs [0036] to [0042] above.

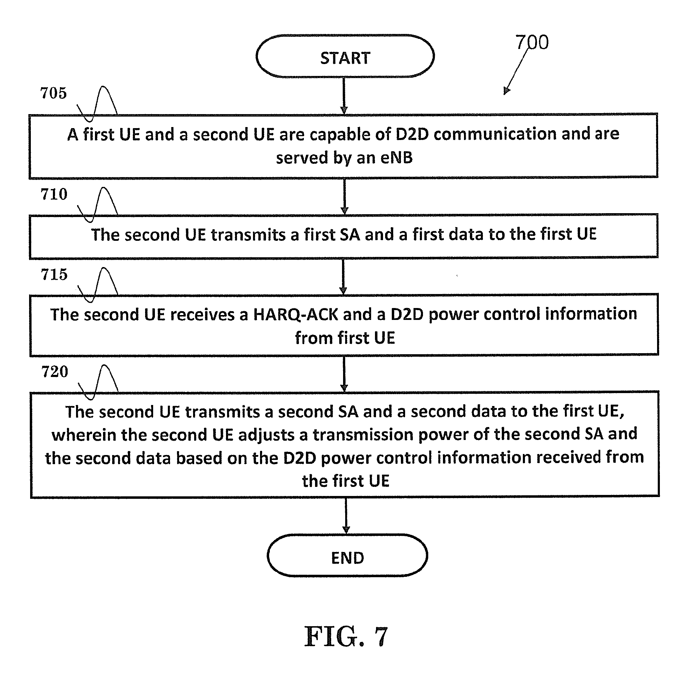

FIG. 7 is a flow chart 700 in accordance with a second exemplary embodiment according to the invention from the perspective of a second UE. In step 705, a first UE and a second UE are capable of D2D communication and are served by an eNB. In step 710, the second UE transmits a first SA and a first data to the first UE. In step 715, the second UE receives a HARQ-ACK and a D2D power control information from first UE. More specifically, the HARQ-ACK is to inform the second UE whether the first UE had successfully received the first SA and the first data or not. In step 720, the second UE transmits a second SA and a second data to the first UE, wherein the second UE adjusts a transmission power of the second SA and the second data based on the D2D power control information received from the first UE.

In general, the second UE transmits SA and data to the first UE repeatedly. After a first SA and a first data are transmitted, the second UE would receive a HARQ-ACK that informs the second UE whether the first UE had successfully received the first SA and the first data or not. The second UE would also receive a D2D power control information from the first UE. Then the second UE would adjust a transmission power of the second SA and the second data based on the D2D power control information received from the first UE and transmits a second SA and second data to the first UE.

In a first embodiment thereof, the D2D power control information could include a D2D TPC command, a nominal D2D transmission power, a UE-specific D2D transmission power, a D2D actual reference signal transmission power value, or any combination thereof. Furthermore, the HARQ-ACK could include an ACK or a NACK.

In a second embodiment thereof, which might be combined with the first embodiment thereof, the eNB could configure the initial transmission power of the HARQ-ACK and the D2D power control information. Alternatively, the initial transmission power of the HARQ-ACK and the power control information could be provided by a D2D discovery signal. More specifically, the initial transmission power of the HARQ-ACK and the power control information could be the same as the D2D discovery signal. Alternatively, the initial transmission power of the HARQ-ACK and the D2D power control information could be indicated or provided by the D2D discovery signal.

Referring back to FIGS. 3 and 4, the device 300 includes a program code 312 stored in memory 310 of a second UE for supporting D2D communication in a wireless communication system, wherein a first UE and the second UE are capable of D2D communication and are served by an eNB. The CPU 308 could execute program code 312 to enable the second UE (i) to transmit a first SA and a first data to the first UE, (ii) to receive a HARQ-ACK and a D2D power control information from first UE, and/or (iiii) to transmit a second SA and a second data to the first UE, wherein the second UE adjusts a transmission power of the second SA and the second data based on the D2D power control information received from the first UE.

In addition, the CPU 308 can execute the program code 312 to perform all of the above-described actions and steps or others described herein, in particular those described in paragraphs [0036] to [0039] and [0045] to [0048] above.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways, in particular a system according to the invention preferably combines the first and second exemplary embodiments according to the invention. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

**Claims**

1. A method for supporting Device-to-Device, in the following also referred to as D2D, services in a wireless communication system, wherein a first user equipment, in the following also referred to as UE, and a second UE are capable of D2D communication and are served by an evolved Node B, in the following also referred to as eNB, (605), comprising:

   the first UE receives a Scheduling Assignment, in the following also referred to as SA and a data from the second UE (610); and
   the first UE transmits a Hybrid Automatic Repeat Request Acknowledgement, in the following also referred to as HARQ-ACK, to the second UE,
   wherein a D2D power control information is delivered with the transmission of the HARQ-ACK (615).

2. The method of claim 1, wherein the D2D power control information includes a D2D Transmit Power Control, in the following also referred to as TPC, command
   and/or a nominal D2D transmission power
   and/or a UE-specific D2D transmission power
   and/or a D2D actual reference signal transmission power value.

3. The method of claim 1 or 2, wherein the HARQ-ACK includes an Acknowledgement, in the following also referred to as ACK, or a Negative Acknowledgement, in the following also referred to as NACK.

4. The method of anyone of claims 1 to 3, wherein a transmission resource of the HARQ-ACK and the power control information are determined by the SA or configured by a higher-layer.

5. A method for supporting Device-to-Device, in the following also referred to as D2D, services in a wireless communication system, wherein a first user equipment, in the following also referred to as UE, and a second UE are capable of D2D communication and are served by an evolved Node B, in the following also referred to as eNB, (705), comprising:

   the second UE transmits a first Scheduling Assignment, in the following also referred to as SA, and a first data to the first UE (710);
   the second UE receives a Hybrid Automatic Repeat Request Acknowledgement, in the following also referred to as HARQ-ACK, and a D2D power control information from the first UE (715); and
   the second UE transmits a second SA and a second data to the first UE,
   wherein the second UE adjusts a transmission power of the second SA and the second data based on the D2D power control information received from the first UE (720).

6. The method of claim 5, wherein the D2D power control information includes a D2D Transmit Power Control, in the following also referred to as TPC, command
   and/or a nominal D2D transmission power
   and/or a UE-specific D2D transmission power
   and/or a D2D actual reference signal transmission power value.

7. The method of claim 5 or 6, wherein the HARQ-ACK includes an Acknowledgement, in the following also referred to as ACK, or a Negative Acknowledgement, in the following also referred to as NACK.

8. The method of anyone of claims 5 to 7, the HARQ-ACK is for informing the second UE whether the first UE had successfully received the first SA and the first data or not.

9. The method of anyone of claims 5 to 8, wherein the eNB configures an initial transmission power of the HARQ-ACK and the D2D power control information.

10. The method of anyone of claims 5 to 9, wherein an initial transmission power of the HARQ-ACK and the power control information is provided by a D2D discovery signal.

11. A first User Equipment, in the following also referred to as UE, (300) for implementing a Device-to-Device, in the following also referred to as D2D, service in a wireless communication system, wherein the first user equipment (300) and a second UE are capable of D2D communication and are served by an evolved Node B, in the following also referred to as eNB, the first UE comprising:

   a control circuit (306);
   a processor (308) installed in the control circuit (306);
   a memory (310) installed in the control circuit (306) and operatively coupled to the processor (308);
   wherein the processor (308) is configured to execute a program code (312) stored in the memory (310) to perform the method steps as defined in anyone of claims 1 to 4.

12. A second User Equipment, in the following also referred to as UE, (300) for implementing a Device-to-Device, in the following also referred to as D2D, service in a wireless communication system, wherein a first UE and the second UE (300) are capable of D2D communication and are served by an evolved Node B, in the following also referred to as eNB, the second UE comprising:

   a control circuit (306);
   a processor (308) installed in the control circuit (306);
   a memory (310) installed in the control circuit (306) and operatively coupled to the processor (308);
   wherein the processor (308) is configured to execute a program code (312) stored in the memory (310) to perform the method steps as defined in anyone of claims 5 to 10.

FIG. 1

FIG. 2

EP 2 945 438 A1

_300_

INPUT
DEVICE
_302_

OUTPUT
DEVICE
_304_

CONTROL CIRCUIT _306_

CPU _308_

MEMORY _310_

PROGRAM CODE _312_

TRANSCEIVER _314_

FIG. 3

PROGRAM CODE *312*

APPLICATION LAYER *400*

LAYER 3 *402*

LAYER 2 *404*

LAYER 1 *406*

FIG. 4

UE-B                    UE-A

Pre-defined            Pre-defined
resource pool          resource pool

                                    Broadcasted resource pool
                                         (DL coverage)

                                 Tx resource request (if DL+UL coverage)

                                 Tx resource grant (if DL+UL coverage)

          D2DSS / PD2DSCH

          Scheduling assignment (SA)

              Broadcast data

# FIG. 5 (PRIOR ART)

START

600

605

A first UE and a second UE are capable of D2D communication and are served by an eNB

610

The first UE receives a SA and a data from the second UE

615

The first UE transmits a HARQ-ACK to the second UE, wherein a D2D power control information is delivered with the transmission of the HARQ-ACK

END

FIG. 6

FIG. 7

Europäisches
Patentamt

European
Patent Office

Office européen
des brevets

## EUROPEAN SEARCH REPORT

Application Number

EP 15 16 7639

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/162333 A1 (KOREA ELECTRONICS TELECOMM [KR]) 31 October 2013 (2013-10-31) | 1-9,11, 12 | INV. H04W52/10 H04W8/00 |
| Y | * abstract * & US 2015/078279 A1 (KO YOUNG JO [KR] ET AL) 19 March 2015 (2015-03-19) * paragraph [0001] - paragraph [0032] * * paragraph [0102] - paragraph [0106] * * paragraph [0133] - paragraph [0138] * * paragraph [0180] - paragraph [0212] * * paragraph [0209] - paragraph [0326] * * paragraph [0359] - paragraph [0398] * * paragraph [0434] - paragraph [0436] * * figures 6, 10-12, 17 * | 10 | ADD. H04L1/18 H04W76/02 |
| Y | GB 2 498 713 A (RENESAS MOBILE CORP [JP]) 31 July 2013 (2013-07-31) * page 4, line 19 - page 4, line 29 * * page 21, paragraph 11 - page 22, paragraph 2 * * figure 6 * | 10 | |
| A | HUAWEI ET AL: "Power control for D2D Signals", 3GPP DRAFT; R1-141928, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 10 May 2014 (2014-05-10), XP050814437, Retrieved from the Internet: URL:http://www.3gpp.org/ftp/tsg_ran/WG1_RL 1/TSGR1_77/Docs/ [retrieved on 2014-05-10] * the whole document * | 1-12 | TECHNICAL FIELDS SEARCHED (IPC) H04W H04L |

-/--

The present search report has been drawn up for all claims

| Place of search | Date of completion of the search | Examiner |
|---|---|---|
| Munich | 14 September 2015 | Gitzenis, Savvas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/168343 A1 (MA NI [CN] ET AL) 27 July 2006 (2006-07-27) <br> * paragraph [0001] - paragraph [0048] * <br> * paragraph [0089] - paragraph [0090] * <br> * paragraph [0116] - paragraph [0119] * <br> * figures 6,7 * <br> ----- | 1-12 | |

TECHNICAL FIELDS
SEARCHED      (IPC)

The present search report has been drawn up for all claims

| Place of search | Date of completion of the search | Examiner |
|---|---|---|
| Munich | 14 September 2015 | Gitzenis, Savvas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 16 7639

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2015

| Patent document cited in search report | | Publication date | Patent family member(s) | | Publication date |
|---|---|---|---|---|---|
| WO 2013162333 | A1 | 31-10-2013 | EP | 2866366 A1 | 29-04-2015 |
| | | | KR | 20130121052 A | 05-11-2013 |
| | | | US | 2015078279 A1 | 19-03-2015 |
| | | | WO | 2013162333 A1 | 31-10-2013 |
| GB 2498713 | A | 31-07-2013 | GB | 2498713 A | 31-07-2013 |
| | | | WO | 2013108114 A1 | 25-07-2013 |
| US 2006168343 | A1 | 27-07-2006 | CN | 1527623 A | 08-09-2004 |
| | | | CN | 1757257 A | 05-04-2006 |
| | | | EP | 1604539 A2 | 14-12-2005 |
| | | | JP | 2006520158 A | 31-08-2006 |
| | | | TW | 200529680 A | 01-09-2005 |
| | | | US | 2006168343 A1 | 27-07-2006 |
| | | | WO | 2004077920 A2 | 16-09-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61993095 A